(19)

Europäisches
Patentamt
European
Patent Office
Office européen
des brevets

(11) **EP 2 275 480 A2**

(12) **EUROPEAN PATENT APPLICATION**
published in accordance with Art. 153(4) EPC

(43) Date of publication:
**19.01.2011 Bulletin 2011/03**

(51) Int Cl.:
***C08K 5/09*** *(2006.01)*

(21) Application number: **09729474.8**

(22) Date of filing: **30.03.2009**

(86) International application number:
**PCT/KR2009/001617**

(87) International publication number:
**WO 2009/125937 (15.10.2009 Gazette 2009/42)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **07.04.2008  KR 20080032177**

(71) Applicant: **Samsung Fine Chemicals Co., Ltd. Ulsan-city 680-090 (KR)**

(72) Inventors:
• **HWANG, Dae-Il**
**Daejeon-city 305-728 (KR)**

• **HWANG, Il-Sun**
**Daejeon-city 305-752 (KR)**
• **AHN, Duck-Kyun**
**Daejeon-city 305-751 (KR)**
• **YANG, Woo-Young**
**Daejeon-city 302-750 (KR)**

(74) Representative: **von Kreisler Selting Werner**
**Deichmannhaus am Dom**
**Bahnhofsvorplatz 1**
**50667 Köln (DE)**

(54) **WAX-RESIN COMPATIBILISER, AND A WAX-RESIN LIQUID DISPERSION CONTAINING THE WAX-RESIN COMPATIBILISER AND A PRODUCTION METHOD THEREFOR**

(57)     A wax-resin compatibilizer, a wax-resin dispersion, and methods of preparing the wax-resin dispersion. The wax-resin dispersion includes a wax, the wax-resin compatibilizer, and a second resin.

Thus, the wax-resin dispersion may have a high wax content and excellent storage stability.

EP 2 275 480 A2

**Description**

BACKGROUND OF THE INVENTION

1. Field of the Invention

The present invention relates to a wax-resin compatibilizer, a wax-resin dispersion, and methods of preparing the wax-resin dispersion, and more particularly, to a wax-resin compatibilizer, a wax-resin dispersion having a high wax content by using the wax-resin compatibilizer and excellent storage stability, and methods of preparing the wax-resin dispersion.

2. Description of the Related Art

Wax-resin dispersions are generally used to manufacture toner for laser printers, ink, paint, protective floor covering materials for homes, rust inhibitors, water repellent agents, etc. and may be prepared by wax emulsification.
A method of preparing a wax emulsion using a homo mixer or a high-pressure homogenizer is disclosed in Japanese Patent Publication No. 2002-308994. According to the method, wax is emulsified at a high pressure of 500 to 1,000 kg/cm$^2$, thereby increasing manufacturing costs.
The wax emulsification generally includes the use of surfactants. However, surfactants deteriorate water-resisting qualities and stain-proofing property of wax. For example, when a wax emulsion including a surfactant is used as an additive for a thermal transfer ribbon, blocking resistance, water resistance, and adhesion of the thermal transfer ribbon deteriorate.
A wax-resin dispersion may be prepared by dissolving wax and a resin in an organic solvent, and dispersing the mixture in a polar medium such as water. In such a wax-resin dispersion, the resin surrounds the surface of the wax to improve stability and durability of the dispersed wax. However, if the content of the wax exceeds a certain level, the wax leaks out of the resin and is precipitated.
As described above, wax-resin dispersions may be applied in various fields. However, excessive energy is required to prepare wax-resin dispersions, physical properties of the wax-resin dispersions deteriorate due to the use of surfactants, and allowable wax content is limited.

SUMMARYOF THE INVENTION

The present invention provides a wax-resin compatibilizer.
The present invention also provides a wax-resin dispersion having high wax content by using the wax-resin compatibilizer and a method of preparing the wax-resin dispersion.
The present invention also provides a wax-resin dispersion having excellent storage stability and a method of preparing the wax-resin dispersion.
According to an aspect of the present invention, there is provided a wax-resin compatibilizer prepared by introducing at least one component selected from the group consisting of a C8-C60 higher fatty acid component and a C8-C60 higher alcohol component into a first resin by esterification.
The first resin may include at least one selected from the group consisting of a polyester resin and a styrene-acrylic resin.
A total amount of the C8-C60 higher fatty acid component and the C8-C60 higher alcohol component is may be the range of 1 to 50% by weight based on the total weight of the wax-resin compatibilizer.
According to another aspect of the present invention, there is provided a wax-resin dispersion including a wax, the wax-resin compatibilizer, and a second resin.
The amount of the wax-resin compatibilizer may be in the range of 2 to 49% by weight based on a total weight of the second resin.
According to another aspect of the present invention, there is provided a method of preparing a wax-resin dispersion, the method including:

dissolving a wax, a resin, and a wax-resin compatibilizer in an organic solvent to prepare a mixture;
forming a fine wax-resin suspension by adding the mixture to a dispersion medium; and
removing the organic solvent from the fine wax-resin suspension.

The wax-resin compatibilizer may be prepared by synthesizing a polyester resin by polycondensation of an acid compound and a diol component and introducing at least one component selected from the group consisting of a C8-C60 higher fatty acid component and a C8-C60 higher alcohol component into the polyester resin by esterification.

The wax-resin compatibilizer may be prepared by synthesizing a styrene-acrylic resin by copolymerization of a polymerizable vinyl monomer that includes at least one selected from the group consisting of a styrene monomer and an acrylic monomer and introducing at least one component selected from the group consisting of a C8-C60 higher fatty acid component and a C8-C60 higher alcohol component into the styrene-acrylic resin by esterification.

<u>DETAILED DESCRIPTION OF THE INVENTION</u>

Hereinafter, the present invention will be described in more detail.

A wax-resin compatibilizer and a wax-resin dispersion according to an embodiment of the present invention will be described in detail.

A wax-resin compatibilizer according to an embodiment of the present invention is prepared by introducing at least one component selected from the group consisting of a C8-C60, specifically, C10-C55, and more specifically, C12-C50 higher fatty acid component and a C8-C60, specifically, C10-C55, and more specifically, C12-C50 higher alcohol component into a first resin by esterification.

The wax-resin compatibilizer facilitates mixing of a wax and a second resin, which will be described later.

The first resin includes at least one selected from the group consisting of a polyester resin and a styrene-acrylic resin.

The polyester resin may be prepared by the polycondensation of a diacid component and a diol component.

The diacid component may be aromatic dicarboxylic acid such as terephthalic acid or isophthalic acid; aliphatic dicarboxylic acid such as phthalic acid, sebacic acid, maleic acid, fumaric acid, or adipic acid; and a lower alkyl ester or acid anhydride thereof, but is not limited thereto. The lower alkyl ester may be monomethyl ester, ethyl ester, dimethyl ester, diethyl ester, or the like. The aromatic dicarboxylic acid increases the glass transition temperature (Tg) and strength of the polyester resin, improves blocking resistance of a final product, and improves water resistance due to its hydrophobicity.

The diol component may be an aliphatic diol component and/or an aromatic diol component, but is not limited thereto. The aliphatic diol component may be ethylene glycol, neopentyl glycol, propylene glycol, butanediol, polyethylene glycol, 1,2-propane diol, 1,4-butanediol, diethylene glycol, triethylene glycol, 1,4-cyclohexane dimethanol, and/or hydrogenated bisphenol A. The aromatic diol component may be a bisphenol A derivative including ethylene oxide such as polyoxyethylene-(2.0)-2,2-bis(4-hydroxyphenyl)propane, polyoxyethylene-(2.3)-2,2-bis(4-hydroxyphenyl)propane, polyoxyethylene-(2.8)-2,2-bis(4-hydroxyphenyl)propane, and polyoxyethylene-(3.0)-2,2-bis(4-hydroxyphenyl)propane; and a bisphenol A derivative including propylene oxide such as polyoxypropylene-(2.0)-2,2-bis(4-hydroxyphenyl)propane, polyoxypropylene-(2.3)-2,2-bis(4-hydroxyphenyl)propane, polyoxypropylene-(2.8)-2,2-bis(4-hydroxyphenyl)propane, and polyoxypropylene-(3.0)-2,2-bis(4-hydroxyphenyl)propane.

The aliphatic diol component is used to increase the polycondensation rate of the resin. The content of the aliphatic diol component may be adjusted according to its purpose of use without limitation.

The aromatic diol component increases the glass transition temperature (Tg) and strength of the polyester resin, reduces the amount of the low molecular weight component of the polyester resin, improves blocking resistance of the final product, and controls reactivity of the polyester resin. The content of the aromatic diol component may be adjusted for its purpose of use without limitation.

In addition, a polyhydric carboxylic acid component containing an at least trihydric carboxylic acid, and/or a polyhydric alcohol component containing an at least trihydric alcohol may be used to prepare the polyester resin. The polyhydric carboxylic acid component and/or polyhydric alcohol components may increase strength of the polyester resin, control molecular weight of the polyester resin or molecular weight distribution thereof, and improve properties of the final product, e.g., fixing properties of the toner.

The polyhydric carboxylic acid may be trimellitic acid, pyromellitic acid, 1,2,4-cyclohexane tricarboxylic acid, 2,5,7-naphthalene tricarboxylic acid, 1,2,4-naphthalene tricarboxylic acid, 1,2,5-hexane tricarboxylic acid, 1,2,7,8-octane tetracarboxylic acid, or an acid anhydride thereof, but is not limited thereto.

The polyhydric alcohol may be sorbitol, 1,2,3,6-hexanetetraol, 1,4-sorbitan, pentaerythritol, dipentaerythritol, tripentaerythritol, 1,2,4-butanetriol, 1,2,5-pentatriol, glycerol, 2-methylpropanetriol, 2-methyl-1,2,4-butanetriol, trimethylolethane, trimethylolpropane, 1,3,5-trihydroxymethylbenzene, or the like, but is not limited thereto.

For example, trimellitic acid or an anhydride thereof, pentaerythritol, and/or trimethylolpropane may be used.

The polyhydric carboxylic acid and/or polyhydric alcohol components may be used alone or in a combination of two or more. The amounts of the polyhydric carboxylic acid and/or polyhydric alcohol components may be adjusted according to their purpose of use without limitation.

Other monomers which do not deteriorate properties of the polyester resin may also be used.

The styrene-acrylic resin may be prepared by copolymerizing a radical-polymerizable vinyl monomer including a styrene monomer and/or an acrylic monomer.

The styrene monomer may be styrene, o-methyl styrene, m-methyl styrene, p-methyl styrene, a-methyl styrene, p-ethyl styrene, 2,4-dimethyl styrene, p-n-butyl styrene, p-tert-butyl styrene, p-n-hexyl styrene, p-n-octyl styrene, p-n-nonyl styrene, p-n-decyl styrene, p-n-clodecyl styrene, p-methoxy styrene, p-phenyl styrene, 3,4-dichloro styrene, or the like. The styrene monomer may be used alone or in a combination of two or more.

In addition, the acrylic monomer may be acrylic acid, ethyl acrylate, methyl acrylate, n-butyl acrylate, t-butyl acrylate, 2-ethylhexyl acrylate, isobutyl acrylate, propyl acrylate, dodecyl acrylate, lauryl acrylate, stearyl acrylate, phenyl acrylate, glycidyl acrylate, 2-hydroxymethyl acrylate, 2-hydroxyethyl acrylate, benzyl acrylate, methacrylic acid, ethyl methacrylate, methyl methacrylate, n-butyl methacrylate, t-butyl methacrylate, 2-ethylhexyl methacrylate, isobutyl methacrylate, propyl methacrylate, dodecyl methacrylate, lauryl methacrylate, stearyl methacrylate, phenyl methacrylate, glycidyl methacrylate, 2-hydroxymethyl methacrylate, 2-hydroxyethyl methacrylate, benzyl methacrylate, dimethylaminoethyl methacrylate, diethylaminoethyl methacrylate, or the like.

In addition, the polymerizable vinyl monomer may be an unsaturated dibasic acid such as maleic acid, butyl maleate, methyl maleate, dimethyl maleate, fumaric acid, butyl fumarate, dibutyl fumarate, diisobutyl fumarate, dimethyl fumarate, and diethyl fumarate; a monomer to which $\varepsilon$-caprolactone and an acrylic monomer are added; or a bisphenol A derivative-based acrylic monomer, or combinations thereof.

Generally, a polymerization initiator may be used to initiate the polymerization. Examples of the polymerization initiator are a benzoyl peroxide-based polymerization initiator and an azo-based polymerization initiator.

More particularly, the polymerization initiator may be selected from the group consisting of: an azo-based polymerization initiator such as 2-2'-azobisisobutyronitrile; ketone peroxide such as methylethylketoneperoxide; peroxyketal such as 1,1-bis(t-butylperoxy)-3,3,5-trimethylcyclohexane; hydroperoxide such as t-butylhydroperoxide; dialkylperoxide such as di-t-butylperoxide; diacylperoxide such as isobutylperoxide; peroxydicarbonate such as di-isopropylperoxy dicarbonate; sulfonyl peroxide such as acetylcyclohexylsulfonyl peroxide; and peroxyester such as t-butylperoxy acetate.

In this regard, an acid value of each of the first resin may be in the range of 0.5 to 30 mgKOH/g, and specifically 1 to 25 mgKOH/g, but is not limited thereto.

When the first resin and/or a second resin that will be described later are prepared, a chain transfer agent may be used to control molecular weights of the first and/or the second resins. The chain transfer agent may be $\alpha$-methylstyrene dimer, n-dodecylmercaptan, thioglycolic acid 2-ethylhexyl ester, n-octyl mercaptan, or the like.

The higher fatty acid may be caprylic acid, capric acid, undecanoic acid, lauric acid, tridecanoic acid, myristic acid, pentadecanoic acid, palmitic acid, palmitoleic acid, heptadecanoic acid, stearic acid, oleic acid, ricinoleic acid, linoleic acid, arachidic acid, arachidonic acid, tricosanoic acid, erucic acid, behenic acid, lignoceric acid, nervonic acid, or the like.

The higher alcohol may be isostearyl alcohol, stearyl alcohol, cetyl alcohol, lauryl alcohol, or the like.

If the number of carbon atoms in each of the higher fatty acid and the higher alcohol is less than 8, durability of the first resin deteriorates even though the higher fatty acid and the higher alcohol are introduced into the first resin by esterification. Thus, storage stability of the first resin deteriorates so that they are not suitable for the wax-resin compatibilizer. On the other hand, if the number of carbon atoms in each of the higher fatty acid and the higher alcohol is greater than 60, it is difficult to introduce them into the first resin by esterification. Even if they are introduced, the size of particles dispersed in the wax-resin dispersion is too large and the particle size distribution becomes worse. The total amount the C8-C60 higher fatty acid component and the C8-C60 higher alcohol component may be in the range of 1 to 50% by weight based on the total weight of the wax-resin compatibilizer. If the total amount of the C8-C60 higher fatty acid component and the C8-C60 higher alcohol component is in the range of 1 to 50% by weight based on the total weight of the wax-resin compatibilizer, compatibility with wax is sufficient, and, compatibility with the first resin is sufficient.

A wax-resin dispersion according to an embodiment of the present embodiment includes a wax, the wax-resin compatibilizer, and a second resin.

The wax may be polyalkylene wax such as low molecular weight polypropylene and low molecular weight polyethylene; ester wax; carnauba wax; paraffin wax; or the like. The amount of the wax may vary according to its purpose of use.

The amount of the wax-resin compatibilizer may be in the range of 2 to 49% by weight based on the total weight of the second resin. If the amount of the wax-resin compatibilizer is within the range described above, the effect of the wax-resin compatibilizer is good.

The second resin may be any resin without limitation.

Hereinafter, a method of preparing a wax-resin dispersion according to an embodiment of the present invention will be described in detail.

First, a method of preparing a wax-resin compatibilizer will be described in detail.

Preparation of polyester resin-based wax-resin compatibilizer

The acid component and the diol component described above are added to a reactor, and a catalyst such as dibutyl tin oxide is added thereto. Then, the reactor is heated to a predetermined temperature while stirring, and the polycondensation is performed. Byproducts produced during the polycondensation are removed using distillation, for example, under a reduced pressure. Then, the higher fatty acid and/or the higher alcohol described above are further added to the reactor. The reactor is heated while stirring to perform esterification between the resin and the higher fatty acid and/or the higher alcohol component, thereby obtaining a resin into which the higher fatty acid and/or the higher alcohol moieties are introduced. However, the present invention is not limited thereto, and the acid component, the diol component, the higher fatty acid and/or the higher alcohol may be simultaneously added to the reactor to perform esterification and polycondensation, thereby preparing a polyester resin-based wax-resin compatibilizer.

Preparation of styrene--acrylic resin-based wax-resin compatibilizer

A solvent and a mixture including the styrene monomer and the acrylic monomer described above are added to a reactor. Then, a polymerization initiator is added to the reactor. Then, the reactor is heated in an inert gas atmosphere while stirring to perform copolymerization to obtain a synthesized resin, and the higher fatty acid and/or the higher alcohol described above are further added to the reactor to perform esterification with the synthesized resin. Distilled water and remaining monomers are removed from the reactor to obtain a styrene-acrylic resin-based wax-resin compatibilizer. However, the present invention is not limited thereto, and the acid component, the diol component, and the higher fatty acid and/or the higher alcohol may be simultaneously added to the reactor to perform esterification and polycondensation, thereby preparing a styrene-acrylic resin-based wax-resin compatibilizer.

Next, a method of preparing a second resin will be described in detail.

If the polyester resin is used as the second resin, a polyester resin-based wax-resin compatibilizer may be used while preparing a wax-resin dispersion. If the styrene-acrylic resin is used as the second resin, a styrene-acrylic resin-based wax-resin compatibilizer may be used to prepare a wax-resin dispersion.

Preparation of polyester resin

A polyester resin is prepared in the same manner as in the preparation of the polyester resin-based wax-resin compatibilizer except that esterification of the synthesized resin performed by adding the higher fatty acid and/or higher alcohol is not conducted.

Preparation of styrene-acrylic resin

A styrene-acrylic resin is prepared in the same manner as in the preparation of the styrene-acrylic resin-based wax-resin compatibilizer except that esterification of the synthesized resin performed by adding the higher fatty acid and/or higher alcohol is not conducted.

Finally, a method of preparing a wax-resin dispersion will be described in detail.

A wax-resin dispersion may be prepared using the wax-resin compatibilizer and a second resin.

Preparation of wax-resin dispersion

A second resin, a wax-resin compatibilizer, a wax, and an organic solvent are added to a first reactor. Then, the first reactor is stirred while refluxing to prepare a wax-resin mixture.

A polar solvent and optionally a surfactant, a neutralizer, and/or a thickener are added to a second reactor, and the second reactor is stirred while heating for about 1 hour to prepare a dispersion medium.

The wax-resin mixture of the first reactor is added to the dispersion medium of the second reactor, and the mixture is stirred while heating to prepare a fine wax-resin suspension.

Then, the organic solvent is removed from the fine wax-resin suspension and the reactor is cooled to room temperature to obtain a wax-resin dispersion.

Conditions for the method, such as stirring speed, stirring time, reaction temperature, reaction time, conditions for removing the organic solvent, etc., may vary according to types of the reactants such as acid, diol, fatty acid, and higher alcohol, and types of the solvent.

The organic solvent used herein is volatile, has a lower boiling point than a polar solvent, and is not miscible with the polar solvent. The organic solvent may include at least one selected from the group consisting of esters such as methyl acetate or ethyl acetate; ketones such as acetone or methylethyl ketone; hydrocarbons such as dichloromethane or trichloroethane; and aromatic hydrocarbons such as benzene.

The polar solvent may include at least one selected from the group consisting of water, glycerol, ethanol, ethylene glycol, propylene glycol, diethylene glycol, dipropylene glycol, and sorbitol. Water may be used.

The surfactant may include at least one selected from the group consisting of a nonionic surfactant, an anionic surfactant, a cationic surfactant and an amphoteric surfactant.

Examples of the nonionic surfactant are polyvinyl alcohol and polyacrylic acid. Examples of the anionic surfactant are sodium dodecyl sulfate and sodium dodecyl benzene sulfonate. Examples of the cationic surfactant are alkyl benzene dimethyl ammonium chloride and alkyl trimethyl ammonium chloride. Examples of the amphoteric surfactant are amino acid-type amphoteric surfactant and betaine type amphoteric surfactant. The surfactants described above may be used alone or in a combination of two or more.

If the first and/or second resin includes an acid group, a base used to neutralize the acid, i.e., a neutralizer, may be used. The neutralizer may be a hydroxide of alkali metal such as potassium hydroxide, sodium hydroxide, or lithium hydroxide; a carbonate of alkali metal such as sodium carbonate, potassium carbonate, or lithium carbonate; an acetate of alkali metal; or alkanol amines such as ammonium hydroxide, methyl amine, dimethyl amine, trimethyl amine, triethyl amine, or triethanol amine. For example, the hydroxide of alkali metal may be used.

The neutralizer may be used at 0.1 to 3.0 equivalents, specifically 0.5 to 2.0 equivalents, per 1 equivalent of the acid group of the acid group-containing resin.

The thickener may include at least one selected from the group consisting of polyvinyl pyrrolidone, polyvinyl alcohol, polyacrylic acid, gelatin, chitosan and sodium alginate.

The wax-resin dispersion prepared according to the present embodiment may be used to manufacture toner for laser printers, ink, paint, protective floor covering materials for homes, rust inhibitors, water repellent agents, etc.

Hereinafter, one or more embodiments will be described in detail with reference to the following examples. However, these examples are not intended to limit the purpose and scope of the invention.

Examples

Preparation of wax-resin compatibilizer

Preparation Example 1: Preparation of polyester resin-based wax-resin compatibilizer

A 3 L reactor equipped with a stirrer, a thermometer, and a condenser was installed in an oil bath. Monomers, i.e., 50 g of dimethyl terephthalate, 50 g of dimethyl isophthalate, and 80 g of 1,2-propylene glycol were added to the reactor. 0.09 g (i.e., an amount of 500 ppm with respect to the total weight of the monomers) of dibutyltin oxide was added thereto as a catalyst. Then, the reaction temperature was increased to 150˚C while stirring the mixture at a speed of 150 rpm. The reaction was performed for about 6 hours, and then the reactor was heated to 220˚C. The reaction pressure was reduced to 0.1 torr in order to remove byproducts, and the reactor was maintained at the same pressure for 15 hours. 50 g of stearic acid was added thereto, and the resultant was stirred at 220˚C for 2 hours to perform esterification to obtain a polyester resin-based wax-resin compatibilizer.

Preparation Example 2: Preparation of styrene-acrylic resin-based wax-resin compatibilizer

600 g of toluene, 65 g of a styrene monomer, 30 g of 2-ethylhexyl acrylate, and 5 g of acrylic acid were added to a 3 L reactor equipped with a thermometer, a stirrer, a nitrogen gas ($N_2$ gas) inlet, and a condenser. Then, 0.02 g of 2,2'-azobisisobutyronitrile (manufactured by Aldrich) was added to the reactor. Then, $N_2$ gas was introduced into the reactor to purge air from the reactor for 1 hour, and the temperature of the reactor was increased to 100˚C while stirring the mixture at a speed of 300 rpm. The reactor was maintained at 100˚C for 3 hours, 5 g of stearyl alcohol was added thereto to perform esterification for 1 hour. Then, the reactor was heated to 130˚C and maintained at the same temperature for 3 hours, and toluene and remaining monomers were removed in a partially reduced pressure of 100 mmHg to obtain a styrene-acrylic resin-based wax-resin compatibilizer.

Preparation of second resin

Preparation Example 3: Preparation of polyester resin

A polyester resin was prepared in the same manner as in Preparation Example 1 except that esterification performed by adding stearic acid to the reactor was not conducted.

The glass transition temperature (Tg) of the polyester resin measured using a differential scanning calorimeter (DSC) was 62˚C. Also, the weight average molecular weight of the polyester resin measured using a gel permeation chromatography (GPC) using polystyrene as a standard sample was $1.2 \times 10^4$. The acid value of the polyester resin measured by titration was 15 mgKOH/g.

Preparation Example 4: Preparation of styrene-acrylic resin

A styrene-acrylic resin was prepared in the same manner as in Preparation Example 2 except that esterification performed by adding stearyl alcohol to the reactor was not conducted.

The glass transition temperature (Tg) of the styrene-acrylic resin measured using a DSC was 57˚C. In addition, the weight average molecular weight of the polyester resin measured using gel permeation chromatography (GPC) using polystyrene as a standard sample was $7.0 \times 10^5$. The acid value of the polyester resin measured by titration was 11 mgKOH/g.

Preparation of wax-resin dispersion

Example 1

100 g of the polyester resin synthesized in Preparation Example 3, 6 g of the wax-resin compatibilizer prepared in Preparation Example 1, 30 g of Waradur E wax (manufactured by Volpker MontanWachs, Germany), and 30 g of methylethyl ketone were added to a 1 L reactor equipped with a condenser, a thermometer, and an impeller stirrer. 0.2 g of 1 N NaOH aqueous solution was added to the reactor, and the mixture was stirred at a rate of 600 rpm, at 80˚C for 3 hours while refluxing to prepare a wax-resin mixture.

600 g of distilled water, 10 g of a neutral surfactant (Tween 20, Aldrich Co.), and 2 g of sodium dodecyl sulfate (Aldrich Co.) as an anionic surfactant were added to a separate 3 L reactor equipped with a condenser, a thermometer and an impeller stirrer, and the mixture was stirred at 85˚C at 600 rpm for 1 hour to obtain a dispersion medium. The wax-resin mixture was added to the dispersion medium and the reactor was stirred at 85˚C, at 1,000 rpm for 1 hour. Then, methylethyl ketone was removed at a partially reduced pressure of 100 mmHg while the reactor was heated to 90˚C, and the reactor was cooled to room temperature to obtain a wax-resin suspension.

As a result of analyzing particles dispersed in the wax-resin dispersion from which methylethyl ketone was completely removed, the obtained particles had a volume average particle size of 0.42 $\mu$m and a 80% span value of 0.78.

Example 2

A wax-resin dispersion was prepared in the same manner as in Example 1 except that the dispersion medium was prepared without using the surfactant.

As a result of analyzing the particles dispersed in the wax-resin dispersion, the obtained particles had a volume average particle size of 0.51 $\mu$m and an 80% span value of 0.88.

Example 3

A wax-resin dispersion was prepared in the same manner as in Example 1 except that the styrene-acrylic resin prepared in Preparation Example 4 was used instead of the polyester resin prepared in Preparation Example 3 and the styrene-acrylic resin-based wax-resin compatibilizer prepared in Preparation Example 2 was used instead of the polyester resin-based wax-resin compatibilizer prepared in Preparation Example 1.

As a result of analyzing the particles dispersed in the wax-resin dispersion, the obtained particles had a volume average particle size of 0.43 $\mu$m and an 80% span value of 0.80.

Example 4

A wax-resin dispersion was prepared in the same manner as in Example 1 except that Carnauba wax (manufacture by Max Chemical, Daejeon, Korea) was used instead of the Waradur E wax.

As a result of analyzing the particles dispersed in the wax-resin dispersion, the obtained particles had a volume average particle size of 0.62 $\mu$m and an 80% span value of 0.84.

Example 5

A wax-resin dispersion was prepared in the same manner as in Example 1 except that 4 g of Waradur E wax was used instead of 30 g of Waradur E wax.

As a result of analyzing the particles dispersed in the wax-resin dispersion, the obtained particles had a volume average particle size of 0.19 $\mu$m and an 80% span value of 0.71.

Comparative Example 1

An attempt was made to prepare a wax-resin dispersion in the same manner as in Example 1 except that the wax-resin compatibilizer was not used. However, the wax-resin dispersion could not be obtained since a phase separation in a wax layer occured.

Comparative Example 2

A wax-resin dispersion was prepared in the same manner as in Example 5 except that the wax-resin compatibilizer was not used.

As a result of analyzing the particles dispersed in the wax-resin dispersion, the obtained particles had a volume average particle size of 0.31 $\mu$m and an 80% span value of 0.92.

The glass transition temperatures (Tg) and acid values of the polyester resin prepared in Preparation Example 3 and the styrene-acrylic resin prepared in Preparation Example 4 were measured using the following method.

First, the glass transition temperature (Tg) was measured using a differential scanning calorimeter (DSC, manufactured by Netzsch Co.) by heating the resins from 20 to 200˚C at 10˚C/min, rapidly cooling them to 10˚C at 20˚C/min, and heating them at 10˚C/min.

The acid value (mgKOH/g) was measured by dissolving the resin in dichloromethane, cooling the solution, and titrating the solution with 0.1N KOH methyl alcohol solution.

Evaluation example

Physical properties of the wax-resin dispersions prepared according to Examples 1 to 5 and Comparative Examples 1 and 2 were evaluated, and the results are shown in Table 1 below.

First, a volume average particle diameter of particles dispersed in the wax-resin dispersions was measured using ELS-Z (manufactured by Otsuka Electronics, Japan).

In addition, the 80% span value, indicating the particle size distribution, was calculated using Equation 1 below. The volume of particles was accumulated from particles of the smallest size in ascending order until the accumulated volume reached 10% of the total volume of the particles. An average particle size of the accumulated particles corresponding to 10% of the total volume of the particles is defined as d10. Average particle sizes of the accumulated particles corresponding to 50% and 90% of the total volume of the particles are respectively defined as d50 and d90.

## Equation 1

$$\text{80\% span value} = (d90\text{-}d10)/d50$$

Here, a smaller 80% span value indicates a narrower particle size distribution, and a larger 80% span value indicates a wider particle size distribution.

Storage stability of the wax-resin dispersions was measured using the following method. 50 g of each of the wax-resin dispersions was added to a 100 ml glass bottle and maintained at 50˚C for 168 hours, and then storage stability was evaluated by observing the wax-resin dispersion with the naked eye. The results are shown as ○, △, ×, which indicate the following properties:

○: No appearance changes such as no precipitation of particles, no phase separation, no increase in viscosity.
△: Weak precipitation, weak phase separation, and slight increase in viscosity.
×: Poor emulsification, strong precipitation, strong phase separation, and significant increase in viscosity.

Table 1

| | Example 1 | Example 2 | Example 3 | Example 4 | Example 5 | Comparative Example 1 | Comparative Example 2 |
|---|---|---|---|---|---|---|---|
| Volume average particle diameter (μm) | 0.42 | 0.51 | 0.43 | 0.62 | 0.19 | N/A | 0.31 |
| 80% span value | 0.78 | 0.88 | 0.80 | 0.84 | 0.71 | N/A | 0.92 |
| Storage stability | ○ | ○ | ○ | ○ | ○ | N/A | △ |

Referring to Table 1, the wax-resin dispersions according to the present invention using the wax-resin compatibilizer (Examples 1 to 4) could be prepared regardless of the use of the surfactant, the types of the wax, and the amount of the wax, and had a narrow particle diameter distribution (80% span value: 0.71 to 0.88) and excellent storage stability. In particular, when the amount of the wax was significantly increased from 4 g to 30 g, the wax-resin dispersion having excellent physical properties could be prepared. On the other hand, in the case of the wax-resin dispersions that were prepared without using the wax-resin compatibilizer (Comparative Examples 1 to 2), phase separation of the wax and the resin occured, and thus a wax-resin dispersion could not be formed when a large amount (30 g) of the wax was used (Comparative Example 1), and the wax-resin dispersion had a wide particle diameter distribution (80% span value: 0.91) and poor storage stability compared to the wax-resin dispersions prepared in Examples 1 to 4 when a small amount (4 g) of the wax was used (Comparative Example 2).

According to the present invention, a wax-resin compatibilizer is provided.

According to the present invention, a wax-resin dispersion having a high wax content is prepared by using the wax-resin compatibilizer and a method of preparing the wax-resin dispersion are also provided.

According to the present invention a wax-resin dispersion having excellent storage stability and a method of preparing the wax-resin dispersion are also provided.

While the present invention has been particularly shown and described with reference to exemplary embodiments thereof, it will be understood by those of ordinary skill in the art that various changes in form and details may be made therein without departing from the spirit and scope of the present invention as defined by the following claims.

**Claims**

1. A wax-resin compatibilizer prepared by introducing at least one component selected from the group consisting of a C8-C60 higher fatty acid component and a C8-C60 higher alcohol component into a first resin by esterification.

2. The wax-resin compatibilizer of claim 1, wherein the first resin comprises at least one selected from the group consisting of a polyester resin and a styrene-acrylic resin.

3. The wax-resin compatibilizer of claim 1, wherein a total amount of the C8-C60 higher fatty acid component and the C8-C60 higher alcohol component is in the range of 1 to 50% by weight based on the total weight of the wax-resin compatibilizer.

4. A wax-resin dispersion comprising a wax, a wax-resin compatibilizer according to any one of claims 1 to 3, and a second resin.

5. The wax-resin dispersion of claim 4, wherein the amount of the wax-resin compatibilizer is in the range of 2 to 49% by weight based on a total weight of the second resin.

6. A method of preparing a wax-resin dispersion, the method comprising:

    dissolving a wax, a resin, and a wax-resin compatibilizer in an organic solvent to prepare a mixture;
    forming a fine wax-resin suspension by adding the mixture to a dispersion medium; and

removing the organic solvent from the fine wax-resin suspension.

7. The method of claim 6, wherein the wax-resin compatibilizer is prepared by synthesizing a polyester resin by polycondensation of an acid compound and a diol component and introducing at least one component selected from the group consisting of a C8-C60 higher fatty acid component and a C8-C60 higher alcohol component into the polyester resin by esterification.

8. The method of claim 6, wherein the wax-resin compatibilizer is prepared by synthesizing a styrene-acrylic resin by copolymerization of a polymerizable vinyl monomer that comprises at least one selected from the group consisting of a styrene monomer and an acrylic monomer and introducing at least one component selected from the group consisting of a C8-C60 higher fatty acid component and a C8-C60 higher alcohol component into the styrene-acrylic resin by esterification.

**EP 2 275 480 A2**

REFERENCES CITED IN THE DESCRIPTION

**Patent documents cited in the description**

- JP 2002308994 A